# DEMANDE DE BREVET EUROPEEN

(11) **EP 4 607 931 A1**
(43) Date de publication de la demande: **27.08.2025**
(21) Numéro de dépôt: 25154308.8
(22) Date de dépôt: 28.01.2025
(51) Int. Cl.: H04N 21/231, H04N 21/845, H04N 5/76

(54) **PROCÉDÉ DE GESTION DE L'ACCÈS À DES CONTENUS AYANT ÉTÉ DIFFUSÉS EN TEMPS RÉEL**

(30) Priorité: 20.02.2024 FR 2401643
(71) Demandeur: Orange, 92130 Issy-les-Moulineaux (FR)
(72) Inventeur: GASTE, Olivier, 92326 Chatillon (FR); MARCHAND, Hervé, 92326 Chatillon (FR)

(57) **Abrégé**

L'invention se rapporte à un procédé de gestion du stockage de parties d'un contenu après diffusions successives desdites parties, le stockage des parties ayant été diffusées étant réalisé sur une plage temporelle donnée (PT) précédant l'instant courant de diffusion (tc1), caractérisé en ce que la plage temporelle varie dans le temps.

## Description

### Domaine technique

Le domaine de l'invention est celui de la gestion du stockage d'un contenu en cours de diffusion en vue d'une lecture en différée par un dispositif de lecture.

Le dispositif de lecture vise tous les dispositifs de traitement de données équipés de processeurs capables de recevoir et de lire ou relire un contenu diffusé depuis un serveur de contenus.

Un tel dispositif de lecture est par exemple un décodeur de télévision numérique.

Le contenu visé ici est un contenu multimédia. Ce contenu est par exemple un contenu télévisé.

### Etat de la technique

Lors d'un accès à un contenu multimédia, un dispositif de lecture émet une requête à destination d'un serveur de contenus en indiquant un contenu multimédia (vidéo et/ou audio) choisi. Le dispositif de lecture reçoit en retour un flux de données numériques relatif à ce contenu.

Les données reçues sont ensuite décodées par le dispositif de lecture, puis restituées sous la forme d'un affichage de lu contenu multimédia correspondant.

Le serveur de contenus peut transmettre un contenu de plusieurs manières à savoir en mode multicast (par exemple IPTV), en mode unicast, etc. Après réception du contenu, le dispositif de lecture décode le contenu et requiert une restitution sur un dispositif de restitution.

Une diffusion d'un contenu vidéo « En Direct » en HTTP Adaptive Streaming (HAS) permet de diffuser une vidéo en mode OTT en proposant la meilleure qualité possible à l'utilisateur en fonction de la bande passante disponible sur le réseau. Cette diffusion s'appuie sur un échange d'un fichier de description (aussi appelé « manifest » par l'homme du métier) entre un serveur de diffusion de contenu HAS et un dispositif de lecture client. Ce fichier de description décrit (sous forme d'URLs), pour des flux Live, les derniers segments vidéo qui ont été produits. Ces segments ont généralement tous une durée identique (par exemple 2 secondes).

Outre la lecture de contenus, certains dispositifs de lecture offrent une fonction appelée « Start Over » par l'homme du métier (ou « rattrapage » ou « lire depuis le début ») qui permet à un utilisateur, par exemple lorsqu'il regarde un contenu diffusé en temps réel (chaîne diffusée en « Live »), de relire en différé une partie du contenu qui a été diffusé en Live ; cette fonction permet notamment de relire un contenu depuis un instant souhaité, par exemple depuis son début. Par exemple, si un film diffusé en temps réel débute à 21h00 et que l'utilisateur accède au flux Live correspondant en zappant sur la chaine à 21h40, l'utilisateur peut demander, en sélectionnant une commande liée à la fonction dite de rattrapage, à ce que la lecture du contenu reprenne par exemple depuis un instant souhaité par exemple 21h15, voire depuis le début du film à savoir 21h. Dans ce cas, on passe d'un mode de lecture en temps réel à un mode de lecture en différée.

Afin de permettre à un utilisateur de revenir sur des émissions diffusées il y a plusieurs heures, les fichiers de description qui sont transmis successivement doivent décrire des segments audio/vidéo dont la production ne correspond plus seulement au direct, mais à une profondeur bien plus importante dans le passé, par exemple 4 heures. On constate alors une augmentation très significative de la taille du fichier de description passant ¨d'une taille de l'ordre de 12ko (description de 30 segments de 2 secondes) pour du « direct » à une teille de l'ordre de 2.8Mo (description de 7200 segments de 2 secondes) pour 4 heures de description. Cette augmentation de la taille du fichier de description nécessite une consommation de bande passante qui devient non négligeable surtout pour les utilisateurs en ADSL et également des temps de parsing importants qui peuvent pénaliser la fluidité de l'interface graphique.

Un autre problème lié au mode « startover » est que, dès qu'une partie de contenu a été diffusée, cette partie est enregistrée par le diffuseur de contenus pendant une durée donnée. La durée donnée correspond dans notre exemple à une plage temporelle précédant l'instant courant de diffusion. Cette plage temporelle PT est par exemple de quatre heures pour toutes les chaînes de télévision. Du fait de la durée constante de la plage temporelle et des instants de début de programmes télévisés qui varient dans le temps d'une chaîne à l'autre, le nombre de contenus accessibles pour un utilisateur dans cette plage temporelle n'est plus alors uniquement les contenus dont la diffusion sont en cours mais aussi des contenus dont la diffusion est terminée.

Les contenus stockés dont la diffusion est terminée occupent donc de l'espace mémoire inutilement. L'espace mémoire dédié au stockage des contenus ayant été diffusés en temps réel n'est donc pas géré de façon optimale. Or, le principal intérêt est de pouvoir relire en différé le contenu en cours de diffusion depuis son début intégralement.

L'invention vient améliorer la situation.

### L'invention

A cet effet, selon un premier aspect fonctionnel, l'invention se rapporte à un procédé de gestion du stockage de parties d'un contenu après diffusions successives desdites parties, le stockage des parties ayant été diffusées étant réalisé sur une plage temporelle donnée précédant l'instant courant de diffusion, caractérisé en ce que la plage temporelle varie dans le temps.

Selon l'invention, contrairement à l'état de la technique dans lequel la taille de la plage temporelle est fixe, la taille de la plage temporelle dédiée au stockage des parties de contenu ayant été diffusée varie dans le temps. On verra dans la suite que cette variation permet de ne stocker que des contenus répondant à des critères donnés.

Grâce à l'invention, du fait que la plage temporelle varie, les parties de contenu stockées en mémoire au fil de la diffusion, en vue d'une éventuelle lecture en différée, peuvent être choisis judicieusement par exemple en fonction de critères prédéfinis. Par exemple, pour un canal de diffusion donné, seul le contenu en cours de diffusion est mémorisé. Selon un autre exemple, en liaison avec un canal de diffusion donné, seul le contenu en cours de diffusion et le dernier contenu dont la diffusion est terminée sont stockés en mémoire. L'invention assure bien une lecture d'un contenu depuis son début.

En outre, lorsque la variation visée ci-dessus est une baisse de la quantité de segments, le fichier de description résultant diminue aussi en taille du fait qu'il y a moins de segments à décrire. En définitive, les téléchargements successifs occupent en conséquence moins de bande passante sur le réseau et la lecture du fichier de description dans le dispositif de lecture s'effectue plus rapidement du fait la taille réduite du fichier de description.

Selon un mode de mise en oeuvre particulier de l'invention, la plage temporelle ayant un instant de début, dit premier instant, et un contenu ayant un instant de début, dit deuxième instant de début ; le premier instant coïncide avec le deuxième instant. Ce mode évite de stocker des contenus dont la diffusion est terminée. Ainsi, un seul contenu est mémorisé dans la plage temporelle à savoir le contenu en cours de diffusion. Ainsi, dès qu'un contenu n'est pas accessible dans son intégralité, il est supprimé de l'espace de stockage et n'est plus décrit dans le fichier de description mis à disposition. Aussi, le fait que les instants coïncident a pour avantage que la demande de lecture en différée depuis le début entraîne une lecture en différée sans attente.

Selon une variante du mode précédent, une temporisation est exécutée avant la lecture en différée. Cette temporisation permet par exemple de diffuser un contenu autre tel qu'un contenu publicitaire, une image, une vidéo affichant un compte à rebours, avant la lecture du contenu en différée. Cette temporisation procure également un confort à l'utilisateur en lui donnant un certain temps pour se préparer à visualiser le contenu dans de bonnes conditions.

Selon un autre mode qui pourra être mis en oeuvre alternativement ou cumulativement avec le précédent, la plage temporelle à un instant de début, dit premier instant, et un contenu a un instant de début, dit deuxième instant de début, et le premier instant précède le deuxième instant. Dans ce mode, l'instant de début de la plage temporelle est telle qu'une lecture depuis le début restituera la fin du dernier contenu dont la diffusion est terminée ; Ile stockage de la fin de ce contenu répond au problème technique en ce que sa restitution sert, tout comme dans le mode précédent avec la temporisation, de procurer un confort à l'utilisateur en lui donnant un certain temps pour se préparer à visualiser le contenu dans de bonnes conditions. Le décalage entre les instants de début est idéalement de quelques secondes et peut être supérieur selon le cas d'usage.

Dans tous les cas, le mode précédent et la variante associée garantissent une lecture du contenu en différée dans son intégralité et réduisent à fortiori la taille du fichier de description car celui-ci ne décrit que les segments du contenu mémorisés en cours de diffusion.

Selon un autre mode qui pourra être mis en oeuvre alternativement ou cumulativement avec les précédents, une plage temporelle a une valeur maximale, et les instants de début visés ci-dessus coïncident jusqu'à atteinte de la plage temporelle maximale. Ce mode permet de limiter l'espace mémoire occupé par un contenu en particulier lorsque ce contenu a une durée importante.

Selon un autre mode qui pourra être mis en oeuvre alternativement ou cumulativement avec les précédents, des contenus sont diffusés sur plusieurs canaux de diffusion distincts. Dans ce cas, la somme des plages temporelles associées à tout ou partie des canaux de diffusion est inférieure à une valeur donnée. Ce mode complète le précédent mode de réalisation en limitant d'une manière globale le stockage associé à l'ensemble des canaux de diffusion.

Selon un premier aspect matériel, l'invention se rapporte à une entité de gestion du stockage de parties d'un contenu après diffusions successives desdites parties, le stockage des parties ayant été diffusées étant réalisé sur une plage temporelle donnée précédant l'instant courant de diffusion, caractérisé en ce que l'entité comprend un processeur configuré pour rendre variable la plage temporelle dans le temps.

Selon un autre aspect matériel, l'invention se rapporte à un dispositif de lecture comprenant une entité de gestion telle que définie ci-dessus.

Selon un autre aspect matériel, l'invention a pour objet un programme d'ordinateur apte à être mis en oeuvre sur une entité de gestion telle que définie ci-dessus, le programme comprenant des instructions de code qui, lorsqu'il est exécuté par un processeur, réalise les étapes du procédé de gestion définies ci-dessus.

Selon un autre aspect matériel, l'invention a pour objet un support de données sur lequel a été mémorisée au moins une série d'instructions de code de programme pour l'exécution d'un procédé de gestion tel que défini ci-dessus.

Le support visé ci-dessus peut être n'importe quelle entité ou dispositif capable de stocker le programme. Par exemple, un support peut comporter un moyen de stockage, tel qu'une mémoire de type ROM (sigle de Read Only Memory), par exemple un CD ROM ou une ROM de circuit microélectronique, ou encore un moyen d'enregistrement magnétique, par exemple un disque dur. D'autre part, un support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés sur lesquels :
[Fig 1] représente un système informatique dans lequel l'invention peut être mise en oeuvre.
[Fig 2] illustre de façon schématique la structure matérielle d'un serveur apte à transmettre des fichiers de description ;
[Fig 3] illustre de façon schématique la structure matérielle d'un dispositif de lecture apte à lire des flux multimédias en temps réel ;
[Fig 4] illustre un mode de réalisation du procédé de l'invention. Cette figure est un grossissement d'une partie de la figure 1 illustrant la gestion du stockage des contenus dans la mémoire du serveur au fil de leurs diffusions respectives ; l'entité gère le stockage des contenus suite à leurs diffusions afin de permettre une lecture en différée du contenu ; cette figure illustre deux états de stockage à deux instants différents dans le temps afin de mettre en avant la variabilité des plages temporelles associées aux canaux de diffusion en fonction du temps, respectivement.

### Description détaillée de modes de réalisation de l'invention

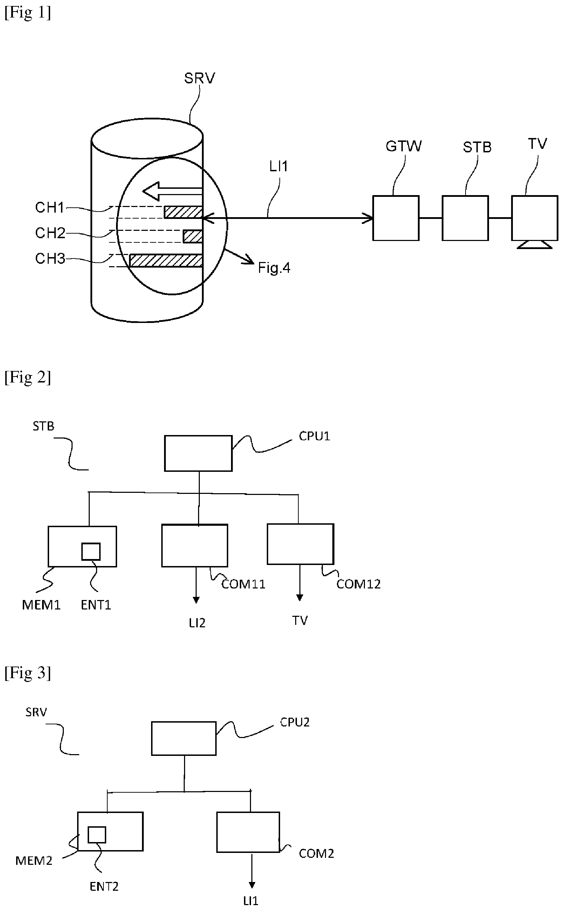

La figure 1 représente un système informatique SYS dans lequel est mis en oeuvre un réseau de diffusion de contenus appelé CDN (Content Distribution Network) par l'homme du métier depuis lequel sont transmis des contenus à destination de dispositifs clients ou dispositifs de lecture de contenus et des fichiers de description associés aux contenus multimédias. Le serveur de diffusion de contenus, appelé dans le présent texte serveur de contenus, diffuse sur plusieurs canaux de diffusion associés à des chaînes de télévision.

Dans notre exemple, à des fins de simplification de l'exposé, le système SYS comprend un seul dispositif de lecture STB. Cependant l'invention s'applique à un nombre quelconque de dispositifs de lecture, le principe de l'invention pouvant être mis en oeuvre sur tout ou partie des dispositifs de lecture STB.

Le dispositif de lecture est par exemple un dispositif de lecture numérique tel qu'un décodeur.

Le contenu multimédia visé ici est un contenu vidéo d'une chaîne de télévision. Ce contenu est diffusé depuis un serveur qui diffuse des programmes télévisés dits Live, c'est-à-dire diffusés en temps réel.

Dans notre exemple, le dispositif de lecture STB est connecté à un terminal de restitution TV tel qu'une télévision. Le dispositif peut transmettre des données à restituer au dispositif de restitution TV.

Dans notre exemple, le dispositif de lecture STB est connecté sur un port du dispositif de restitution TV ; le dispositif de lecture STB et le dispositif de restitution TV pourrait aussi former un seul et unique dispositif.

Dans notre exemple, le dispositif de lecture STB est situé dans un réseau local LAN (sigle anglosaxon de « Local Area Network ») géré par une passerelle domestique GTW.

La passerelle GTW est apte à communiquer via une liaison de communication LI1 qui peut être un réseau de télécommunication tel qu'un réseau étendu WAN connu de l'homme du métier.

Dans notre exemple, le système informatique SYS met en oeuvre un réseau de diffusion de contenus appelé CDN (Content Distribution Network) par l'homme du métier depuis lequel des contenus sont transmis à destination de dispositifs de lecture de contenus STB.

Le réseau CDN est constitué de serveurs reliés en réseau dans le réseau étendu ; ces serveurs coopèrent afin de mettre des contenus multimédias à disposition des utilisateurs. Afin de simplifier l'exposé de l'invention, un seul serveur de contenus SRV sera représenté sur la figure 1 pour représenter le CDN. Le serveur de contenus SRV se trouve, dans notre exemple, dans le réseau étendu WAN.

Le serveur de contenus SRV reçoit par exemple des chaînes de contenus de télévision numérique en provenance d'un réseau de télévision diffusée (non représenté), et les met à disposition en temps réel à des terminaux clients, ici le dispositif de lecture STB, via des canaux de diffusion.

La figure 2 représente une architecture d'un dispositif de lecture STB. Ce dispositif STB comprend, classiquement, des mémoires MEM1 associées à un processeur CPU1. Les mémoires peuvent être de type ROM (de l'anglais « Read Only Memory ») ou RAM (de l'anglais « Random Access Memory ») ou encore Flash.

Le dispositif de lecture STB peut transmettre un contenu à restituer au dispositif de restitution TV via un module de communication COM12. Ce module COM12 est par exemple une liaison HDMI.

Le dispositif de lecture STB communique avec la passerelle via un module Ethernet pour une communication locale avec fils ou via un module radio de type Wi-Fi pour une communication locale sans fils avec la passerelle résidentielle GTW. Le module en question est référencé CMO11 sur la figure 2.

Dans notre exemple, le dispositif de lecture STB comprend un module de téléchargement en mode streaming HAS (http Adaptative Streaming), non représenté, apte à gérer le téléchargement de segments du contenu lorsque le contenu est transmis sur le réseau LI1 sous forme de segments conformément à la technique dite de streaming adaptatif connu de l'homme du métier.

Rappelons brièvement ici que lorsqu'un utilisateur accède à un flux Live diffusé en http Adaptative Streaming (HAS), le dispositif de lecture STB reçoit à intervalle régulier, en général toutes les deux secondes, des fichiers de description successivement, appelés ci-après fichiers de description temps réels, qui décrivent chacun généralement les soixante dernières secondes du flux (30 segments de 2 secondes) en fournissant des adresses de type URLs de segments correspondant à ces soixante dernières secondes. Grâce aux adresses de segments reçues, le dispositif de lecture STB peut télécharger les segments et les lire les uns après les autres.

En référence à la figure 3, le serveur SRV est également équipé d'au moins un processeur CPU2 et de mémoires MEM2 pour la réalisation de traitement informatique. Le serveur est également équipé d'une entité de gestion ENT objet de l'invention dont la fonction sera décrite ci-après.

Le serveur SRV communique avec la passerelle GTW via réseau WAN. Le serveur comprend, un module de communication référencé COM2 pour la communication avec le réseau WAN.

Il arrive parfois de manquer le début d'un programme télévisé (film, série, etc.) diffusé en temps réel, ou de souhaiter relire un contenu depuis un instant donné. Une fonction appelée « lire du début » ou « rattrapage » (appelée également « Start Over » ou « Restait » par l'homme du métier) permet de reprendre, à tout moment, le programme en cours de diffusion à un instant antérieur à l'instant courant ; par exemple, la lecture du contenu peut être reprise depuis son commencement, ou depuis un instant choisi par un utilisateur. Par exemple, si un film débute à 21h00 et si l'utilisateur zappe sur la chaine à 21h40, il peut demander à ce que la lecture du contenu reprenne depuis le début du film. Dans ce cas, on passe d'un mode de lecture à un contenu en temps réel à un mode de lecture en différée.

Pour accéder à un contenu en lecture différée le serveur SRV mémorise les parties de contenu ayant été diffusées. Dans notre exemple, comme indiqué ci-dessus, les parties sont des segments de contenu. Les segments ayant été diffusés sont enregistrés en mémoire MEM2 juste après leurs diffusions respectives.

Ces parties de contenu sont mémorisés pendant une certaine durée. Des fichiers de description sont créés en conséquence et incluent non seulement les adresses des derniers segments produits mais aussi les adresses des segments mémorisés ; ces fichiers sont ensuite mis à dispositif du dispositif de lecture STB pour pouvoir accéder aux segments en les téléchargeant grâce aux adresses URL incluses dans ces fichiers.

A noter que les segments ayant été diffusés sont stockés sur une plage temporelle précédant l'instant courant de diffusion de diffusion.

Selon l'invention, une entité de gestion ENT va gérer les plages temporelles PTn associés à différents canaux de diffusion CHn en faisant varier les plages temporelles dans le temps. Dans notre exemple, l'entité va gérer les plages temporelles de manière à ne mémoriser que les contenus en cours de diffusion respectivement sur les différents canaux de diffusion. Des fichiers de description sont créés en conséquence.

En définitive, les plages temporelles peuvent différer d'un canal à un autre.

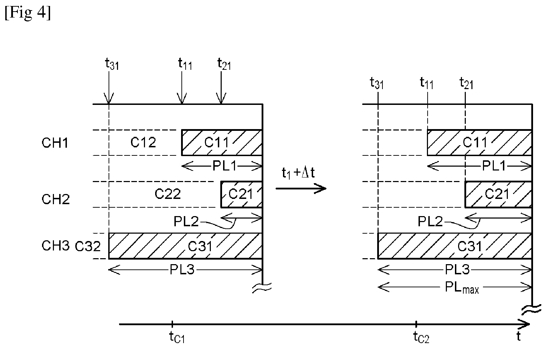

La figure 4 décrite ci-dessous vont permettre d'illustrer schématiquement des modes de réalisations possibles.

La figure 1 illustre schématiquement au niveau du serveur SRV une liste de contenus issus de canaux de diffusion de chaînes de télévision respectives CH1-CH3 ; la figure 5 est un vue schématique grossie d'une partie de la figure 1 ; cette partie illustre schématiquement l'état d'occupation de la mémoire en liaison avec chacun des trois canaux de diffusion CH1/CH2/CH3 respectifs. Un axe temporel est représenté afin de définir le sens de diffusion.

Des plages temporelles PTn (n correspond à un canal CHn, n est un entier) sont aussi représentées en liaison avec chaque canal de diffusion. Les plages temporelles précèdent l'instant courant tc1 (ou tc2) de diffusion d'une certaine durée. Comme expliqué ci-dessus, cette plage est gérée par l'entité ENT qui va faire en sorte que la durée choisie est telle que les canaux ne stockent que le contenu en cours de diffusion. A noter que cela n'est qu'un mode de réalisation ; d'autres modes peuvent être imaginés dans lesquels une variation de la plage temporelle est mise en oeuvre.

Cette figure 4 illustre une évolution dans le temps du stockage des contenus au fil de leurs diffusion respectives.

Plus précisément, la figure 4 comprend un état du stockage des contenus à un premier instant tc1 et un état du stockage des contenus à un instant tc2 ultérieur.

Au premier un instant courant donné tc1, dit instant courant, les chaînes sont en cours de diffusion en temps réel de contenus C11, C21, C31 respectivement :
Un premier contenu C11 dont la diffusion a démarré à l'instant t11 ;
un deuxième contenu C21 dont la diffusion a démarré à l'instant t21
un troisième contenu C31 dont la diffusion a démarré à l'instant t31.

A ce stade, si un utilisateur accède à la chaîne CH2, le dispositif de lecture STB reçoit et restitue le contenu diffusé en temps réel sur cette chaîne à savoir le contenu C21, par exemple un match de Football.

Antérieurement à la restitution des contenus diffusés en temps réel C11, C21 et C31, les mêmes chaînes CH1, CH2 et CH3 ont diffusé des contenus successivement à savoir :
- La chaîne CH1 a diffusé le contenu C12 et terminé la diffusion à l'instant t12 ; la chaîne CH1 a ensuite diffusé le contenu C11 de l'instant t11, qui correspond à l'instant t12 dans notre exemple (un cas où t11 et t12 ne correspondent pas est pas exemple le cas où des publicités s'intercalent entre les deux contenus C11 et C12), et poursuit la diffusion de ce contenu à l'instant courant tc1.
- La chaîne CH2 a diffusé le contenu C22 et terminé la diffusion à l'instant t21 ; la chaîne CH1 a ensuite diffusé le contenu C21 de l'instant t21 et poursuit la diffusion de ce contenu à l'instant courant tc1.
- La chaîne CH3 diffuse un contenu C23 depuis une durée supérieure à une plage temporelle maximale définie ci-dessus.

Selon un mode de réalisation, en considérant que la plage temporelle PTn a un instant de début et un instant de fin, l'entité de gestion ENT fait faire coïncider l'instant de début référencé ti (i est un entier entiers et désigne le ième canal) de la plage temporelle considérée avec l'instant de début du contenu en cours de diffusion.

Selon une variante, un léger décalage peut être prévu entre ces deux instants. Ce décalage peut par exemple permettre au diffuseur d'insérer un contenu avant restitution du contenu mémorisé ; ce contenu est par exemple un contenu publicité, une image, etc.

En reprenant l'exemple ci-dessus, pour chaque plage temporelle, l'instant de début de la première plage temporelle associée au premier canal CH1 coïncide avec l'instant de commencement t11 du contenu C11 en cours de diffusion sur ce premier canal CH1.

Sur la figure 4, à l'instant courant tc1,
- Pour le canal CH1, la plage temporelle PT1 s'étend de l'instant courant tc jusque t11 commencement du contenu C1 ;
- Pour le canal CH2, la plage temporelle s'étend de l'instant courant tc jusque t21 commencement du contenu C2 ;
- Pour le canal CH3, la plage temporelle PT3 s'étend de l'instant courant tc jusque l'instant t31 commencement du contenu C3

Sur la figure 4, les cadres en traits pleins et hachurés visent les parties de contenus stockés en mémoire et donc accessibles en lecture en différée ; les cadres en pointillés visent les parties de contenus non stockés en mémoire et ne sont pas, de ce fait, accessibles en lecture en différée.

La figure 4 illustre aussi un état des contenus stockés à un autre instant ultérieur tc2 ultérieur :
Entre t1 et t2, le serveur a poursuivi la diffusion des contenus C11/C21/C31. On suppose que les mêmes contenus sont en cours de diffusion. Du fait que, dans le mode de réalisation choisi, l'instant de début d'une plage temporelle tn (n est un entier désignant le n-ième canal) coïncide avec le l'instant de début tn1 du contenu en cours de diffusion, les différentes plages temporelles PTn ont augmenté d'une durée correspondant à la soustraction des deux durées t1 et t2 (t2-t1).

Sur la partie droite de la figure 4, on voit que les plages temporelles varient dans le temps de manière à lire en différé uniquement le contenu en cours de diffusion.

En effet, supposons qu'un utilisateur souhaite lire en différé le contenu C21.

Cet utilisateur sélectionne le deuxième canal CH2, le contenu en cours de diffusion est reçu par le dispositif de lecture STB qui restitue le contenu C21.

Lorsque l'utilisateur souhaite lire en différé ce contenu C21, une interface s'affiche par exemple sur le dispositif de restitution TV sous forme de bandeau en bas de l'écran, par exemple après avoir zappé sur une chaîne de télévision. Par exemple, lorsque l'utilisateur zappe avec sa télécommande, à chaque accès à une chaîne, un bandeau incluant des informations et des commandes en liaison avec le mode de lecture en différée s'affiche. Cet affichage permet à un utilisateur qui accède au programme télévisé de requérir une lecture en différée d'un contenu mémorisé.

Dans notre exemple, l'interface restitue les commandes accessibles depuis le bandeau sont la commande de retour en arrière connue sous le symbole « < < », une commande de retour depuis le début (représenté par un symbole en forme de cercle fléché dans le sens inverse des aiguilles d'une montre) permettant de relire un contenu depuis son début.

On trouve aussi parfois une commande de retour au direct Live qui permet, lorsqu'une lecture en différée est en cours, de revenir sur le flux Live et poursuivre la lecture du contenu diffusé en Live. Néanmoins, dans le présent texte, cette commande n'est pas représentée car inutile pour l'exposé de l'invention.

Les commandes sont accessibles depuis une interface de commande telle qu'une télécommande. Les commandes de retour en arrière ou de retour depuis le début entraînent lorsqu'elles sont exécutées par le processeur CPU1 du dispositif de lecture STB une lecture différée du contenu Live en cours de diffusion.

L'utilisateur sélectionne sur l'interface la commande lire depuis le début.

A cet instant, l'entité de gestion ENT requiert un accès au contenu C21 depuis son début.

Suite à la réception de la requête d'accès, le serveur SRV transmet un fichier de description incluant les URLs des segments qui correspondent à l'instant de début de la plage temporelle t21 qui correspond à l'instant de début t21 du deuxième contenu C21.

Le dispositif de lecture STB accède aux segments du contenu grâce aux URLs inclus dans le fichier de description.

Grâce au mode de réalisation décrit ci-dessus, une commande de lecture depuis le début entraîne une lecture depuis le début du contenu en cours de diffusion.

L'invention ne se limite pas à cet exemple. L'instant de début de la plage temporelle pourrait coïncider avec l'instant de début du dernier contenu ayant été diffusé et dont la diffusion est terminée.- On peut imaginer d'autres variantes possibles. Dans tous les cas, la plage temporelle varie en ce sens qu'elle augmente ou diminue. Ce principe peut être applicable à un sous-ensemble de canaux, le fonctionnement sur les autres canaux fonctionnant comme dans l'art antérieur.

La plage temporelle ne peut pas augmenter indéfiniment. Selon une variante possible, la plage temporelle a une valeur maximale PLmax. Dans ce cas, les instants de début coïncident jusqu'à atteinte de la plage temporelle maximale. Au-delà, la plage temporelle conserve une durée constante correspondant à la plage temporelle maximale PLmax. Cette variante permet à la fois de limiter l'espace mémoire occupé par un contenu en particulier lorsque ce contenu a une durée importante et de limiuter la taille des fichiers de description décrivant les segments mémorisés en conséquence Selon un autre mode pouvant être mise en oeuvre alternativement ou cumulativement avec le précédent, la somme des plages temporelles associées à tout ou partie des canaux de diffusion est inférieure à une valeur donnée. Par exemple, en considérant les trois canaux décrits en référence à la figure 4, la somme des tailles en octets des plages temporelles doit être inférieure à une taille donnée en octets. Ce mode permet de limiter l'espace mémoire occupé dans le serveur SRV.

Aussi, la somme des plages temporelles peut ne concerner qu'une partie des canaux par exemple les canaux CH1 et CH3.

Lorsque la somme des plages temporelles atteint une valeur maximale, l'entité de gestion ENT peut par exemple ne plus stocker de contenus en mémoire jusqu'à ce que la somme des plages diminuent en dessous de la valeur maximale fixée.

Selon un dernier mode utilisable isolément ou en combinaison avec un précédent mode, la plage temporelle ayant un instant de début, dit premier instant, et un contenu ayant un instant de début, dit deuxième instant de début, le premier instant précède le deuxième instant. Idéalement, le premier instant précède de quelques secondes le deuxième instant. Ce décalage permet à un utilisateur par exemple de s'installer devant son écran.

Précisons enfin ici aussi ici que le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion du stockage de parties d'un contenu après diffusions successives desdites parties, le stockage des parties ayant été diffusées étant réalisé sur une plage temporelle donnée (PT) précédant l'instant courant de diffusion (tc1), **caractérisé en ce que** la plage temporelle varie dans le temps.

2. Procédé de gestion selon la revendication 1, **caractérisé en ce que** la plage temporelle (PT) à un instant de début, dit premier instant, et un contenu a un instant de début, dit deuxième instant de début, et **en ce que** le premier instant coïncide avec le deuxième instant.

3. Procédé de gestion selon la revendication 2, **caractérisé en ce qu'**une temporisation est exécutée avant la lecture en différée.

4. Procédé de gestion selon la revendication 1, **caractérisé en ce que** la plage temporelle (PT) à un instant de début, dit premier instant, et un contenu a un instant de début, dit deuxième instant de début, et **en ce que** le premier instant précède le deuxième instant.

5. Procédé de gestion selon la revendication 1, **caractérisé en ce que** des contenus sont diffusés sur plusieurs canaux de diffusion distincts, et **en ce que** la somme des plages temporelles associées à tout ou partie des canaux est inférieure à une valeur donnée.

6. Entité de gestion (ENT) du stockage de parties d'un contenu après diffusions successives desdites parties, le stockage des parties ayant été diffusées étant réalisé sur une plage temporelle donnée (PT) précédant l'instant courant de diffusion (tc1), **caractérisé en ce que** l'entité comprend un processeur configuré pour rendre variable la plage temporelle dans le temps.

7. Serveur (SRV) comprenant une entité de gestion (ENT1) telle que définie dans la revendication 6.

8. Programme d'ordinateur apte à être mis en oeuvre sur une entité de gestion (ENT) telle que définie dans la revendication 6, le programme comprenant des instructions de code qui, lorsqu'il est exécuté par un processeur, réalise les étapes du procédé définies dans la revendication 1.

9. Support de données sur lequel a été mémorisée au moins une série d'instructions de code de programme pour l'exécution d'un procédé selon la revendication 1.
